# EUROPEAN PATENT APPLICATION

(11) **EP 2 911 406 A1**
(43) Date of publication of application: **26.08.2015**
(21) Application number: 14305259.5
(22) Date of filing: 25.02.2014
(51) Int. Cl.: H04N 21/442, H04N 21/6373, H04N 21/6379, H04N 21/2343, H04N 21/238

(54) **Method and device for encoding a video**

(71) Applicant: ALCATEL LUCENT, 92100 Boulogne-Billancourt (FR)
(72) Inventor: Delegue, Gérard, 91620 Nozay (FR); Bouche, Nicolas, 91620 Nozay (FR)
(74) Representative: ALU Antw Patent Attorneys

(57) **Abstract**

Embodiments relates to a method for encoding a video (V_{R}), executed by a video encoding device (2), comprising:
- encoding said video (V_{R}) according to a first value of at least one encoding parameter (P_{ENC}),
- streaming the encoded video (V_{E}) to a video decoding device,
- receiving, from the video decoding device, a data element (R) representative of at least one of the duration of a decoding operation of the encoded video (V_{E}) by the video decoding device, and a prediction of the duration of a decoding operation of the encoded video (V_{E}) by the video decoding device,
- determining an updated value of the at least one encoding parameter (P_{ENC}) in function of the data element (R),
- encoding said video (V_{R}) according to the updated value of the at least one encoding parameter (P_{ENC}).

## Description

### FIELD OF THE INVENTION

The present invention relates to the field of transmission of video streams. In particular, the present invention relates to a method and a device for encoding a video, and to a method and a device for decoding a video.

### BACKGROUND

Video adaptation refers to adapting the encoding of a video before transmission of the video stream to a decoding device. The signal-level video adaptation may involve manipulation of video signals in the following dimensions:
- Spatial: change of spatial resolution, i.e. frame size;
- Precision: change the bit plane depth, the color depth, or the step size for quantizing the transform coefficients;
- Temporal: change the frame rate;
- Object: transmit a subset of object.

It has been proposed to adapt the encoding of a video in function of transmission characteristics of the link between the encoding device and the decoding device: bandwidth, delay, jitter, packet loss... For example, if the bandwidth drops, reducing the frame rate allows continuing to transmit and decode a video stream in real time. However, this may not always be sufficient to ensure that the video is decoded in real time.

### SUMMARY

It is thus an object of embodiments of the present invention to propose a method and a device for encoding or decoding a video stream, which do not show the inherent shortcomings of the prior art.

Accordingly, embodiments relate to a method for encoding a video, executed by a video encoding device, comprising:
- encoding said video according to a first value of at least one encoding parameter,
- streaming the encoded video to a video decoding device,
- receiving, from the video decoding device, a data element representative of at least one of the duration of a decoding operation of the encoded video by the video decoding device, and a prediction of the duration of a decoding operation of the encoded video by the video decoding device,
- determining an updated value of the at least one encoding parameter in function of the data element,
- encoding said video according to the updated value of the at least one encoding parameter.

Correspondingly, embodiments relate to video encoding device for encoding a video, comprising:
- a video encoder for encoding a video according to a first value of at least one encoding parameter,
- means for streaming the encoded video to a video decoding device,
- means for receiving, from the video decoding device, a data element representative of at least one of the duration of a decoding operation of the encoded video by the video decoding device, and a prediction of the duration of a decoding operation of the encoded video by the video decoding device,
- an encoding parameter determination module for determining an updated value of the at least one encoding parameter in function of the data element,
- wherein said video encoder is configured for encoding said video according to the updated value of the at least one encoding parameter.

The data element may be representative of at least one of:
- a total duration for decoding a frame of the encoded video,
- a duration for an entropy decoding,
- a duration for an inverse transform,
- a motion compensation duration,
- a spatial interpolation duration, and
- of a predicted mean duration for decoding a frame of the encoded video.

The method may comprise:
- receiving, from a second video decoding device, a second data element representative of at least one of the duration of a decoding operation of the encoded video by the second video decoding device, and a prediction of the duration of a decoding operation of the encoded video by the second video decoding device,
- determining a second updated value of the at least one encoding parameter in function of the second data element.

The method may comprise determining whether processing resources of the video encoding device are sufficient, and in the affirmative encoding said video according to the second updated value of the at least one encoding parameter and streaming the corresponding encoded video to the second video decoding device.

Embodiments also relates to a method for decoding a video, executed by a video decoding device, comprising:
- receiving an encoded video streamed from a video encoding device,
- decoding the encoded video,
- determining a duration of a decoding operation of the encoded video by the video decoding device,
- transmitting, to the video encoding device, a data element representative of at least one of said duration and a prediction of a duration of a decoding operation of the encoded video by the video decoding device.

Correspondingly, embodiments relates to a video decoding device for decoding a video, comprising:
- means for receiving an encoded video streamed from a video encoding device,
- a video decoder for decoding the encoded video and determining a duration of a decoding operation of the encoded video by the video decoding device,
- a report sender for transmitting, to the video encoding device, a data element representative of at least one of said duration and a prediction of a duration of a decoding operation of the encoded video by the video decoding device.

In some embodiments, decoding a frame of the encoded video comprises an entropy decoding, an inverse transform, a motion compensation and a spatial interpolation, the method comprising determining at least one of:
- a total duration for decoding a frame of the encoded video,
- a duration for the entropy decoding,
- a duration for the inverse transform,
- a motion compensation duration, and
- a spatial interpolation duration.

The method may comprise:
- detecting a critical situation in function of said duration of a decoding operation and/or of said prediction of a duration of a decoding operation,
- in response to the detection of a critical situation, determining whether to transmit said data element to the video encoding device in function of a maximum number of transmission by unit of time.

Embodiments also relate to a computer program comprising instructions for performing one of the methods mentioned before when said instructions are executed by a computer.

### BRIEF DESCRIPTION OF THE DRAWINGS

The above and other objects and features of the invention will become more apparent and the invention itself will be best understood by referring to the following description of embodiments taken in conjunction with the accompanying drawings wherein:
Figure 1 show a system for transmitting a video stream,
Figure 2 is a functional view of the video encoding device of figure 1,
Figure 3 is a functional view of the video decoding device of figure 1,
Figure 4 is a structural view of a device for encoding or decoding a video.

### DESCRIPTION OF EMBODIMENTS

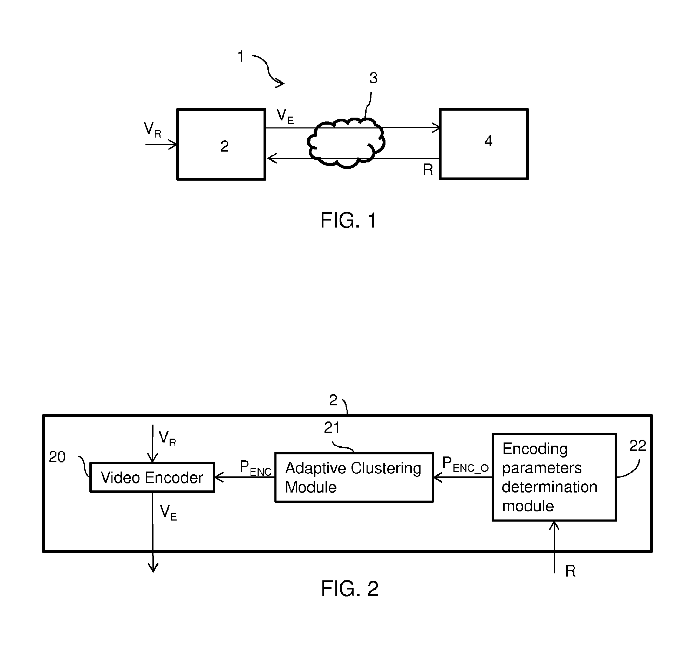

**Figure 1** shows a system 1 for transmitting a video stream, for example for content consumption or video conferencing. The system 1 comprises a video encoding device 2 and a video decoding device 4 connected by a network 3.

The video encoding device 2, which will be described in more detail with reference to figure 2, encodes a raw video V_{R} and streams the encoded video V_{E} to the video decoding device 4, through the network 3. The video encoding device 2 is for example a media server which streams videos to one or more video decoding devices 4. The video encoding device 2 may also be a user terminal which transmits a video to a media server or to another user terminal.

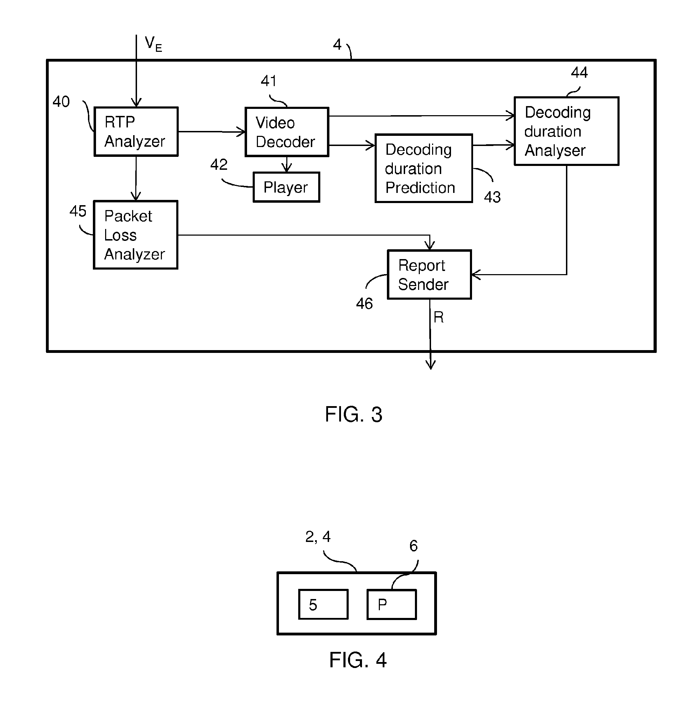

The video decoding device 4, which will be descried in more detail with reference to figure 3, receives the encoded video V_{E}, decodes it, and displays the decoded video. The video decoding device 4 is for example a user terminal which receives and displays videos.

The video decoding device 4 sends reports R to the video encoding device 2, and the video encoding device 2 adapts the encoding of the raw video V_{R} in function of the reports R. The reports R include the duration of decoding operations of the video V_{E} by the decoding device and/or a prediction of the mean duration of future decoding operations. The reports R may also include transmission characteristics, for example packet loss, Picture loss indication, Slice loss indication, Reference Picture Selection indication as specified in RFC 4585.

The network 3 is for example an IP network, for example the Internet.

**Figure 2** is a functional view of the video encoding device 2. The video encoding device 2 comprises a video encoder 20, an adaptive clustering module 21, and an encoding parameters determination module 22.

The video encoder 20 encodes the raw video V_{R} to an encoded video V_{E}, in function of encoding parameters P_{ENC}. The encoded video V_{E} is streamed to the decoding device 4. The encoding parameters P_{ENC} specify for example the frame size, the bit plane depth, the color depth, the step size for quantizing the transform coefficients, the frame rate and/or a subset of objects to be encoded. The video encoder 20 is capable of video adaptation. In other words, initially, the video may be encoded with initial values for the encoding parameters P_{ENC}, and later the values of the encoding parameters P_{ENC} may change. The video may be encoded based on a video encoding standard such as H264 or VP8.

The encoding parameters determination module 22 receives the reports R from the video decoding device 4, and determines optimal values for the encoding parameters, denoted P_{ENC_O}, in function of the reports R and of the initial or current values of the encoding parameters P_{ENC}. The encoding parameters P_{ENC_O} are transmitted to the adaptive clustering module 21 as a recommendation. The recommendation of the encoding parameters determination module 22 can have an impact on the rendering of the encoded video V_{E} (new frame rate, new resolution, new quality) or on the bandwidth used (e.g. modification of the number of P-frame).

In an embodiment, the encoding parameters P_{ENC_O} are directly used as encoding parameters P_{ENC} by the video encoder 20. The adaptive clustering module 21 is not necessary in this case.

In another embodiment, wherein the video should be transmitted to more than one video decoding devices 4, the encoding parameters determination module 22 determines sets of encoding parameters for the respective video decoding devices 4, and the video encoding device 2 may comprises more than one video encoders 20. In this case, the adaptive clustering module 21 is in charge of limiting the number of personalized video adaptations. Thus, when the adaptive clustering module 22 receives sets of encoding parameters P_{ENC_O} from the encoding parameters determination module 22, it selects the one that should be transmitted as encoding parameters P_{ENC} to the video encoders 20 in function of the processing resources of the video encoding device 2. The video adaptation is thus managed globally by considering the resources used by all participants for all sessions. A trade-off is achieved by considering the individual requirements of each participant but also the resource constraints of the video encoding device 2. This trade-off is regularly reconsidered to take into account the dynamic behavior of participant and the dynamic evolution of the network 3.

For example, if the video is transmitted to three video decoding devices 4, the encoding parameters determination module 22 determines three sets of encoding parameters P_{ENC_O_A}, P_{ENC_O_B}, and P_{ENC_O_C}. If the adaptive clustering module 21 determines that the processing resources of the video encoding device 2 are sufficient, the adaptive clustering module 22 provides the encoding parameters P_{ENC_O_A}, P_{ENC_O_B}, and P_{ENC_O_C} as encoding parameters P_{ENC} to the video encoders 20, and the video is encoded in three different manners for the respective video decoding devices 4. Later, if the adaptive clustering module 22 determines that the processing resources of the video encoding device 2 are not sufficient anymore, it selects two sets of encoding parameters P_{ENC_O_A}, P_{ENC_O_B} as encoding parameters P_{ENC} for the video encoders 20, and the video is encoded in two different manners: two video decoding devices 4 will receive the same encoded video stream V_{E}.

The tasks performed by the functional modules (references 20 to 22) of the video encoding device 2 may correspond to steps of a video encoding method.

**Figure 3** is a functional view of the video decoding device 4. The video decoding device 4 comprises a RTP analyzer 40, a video decoder 41, a player 42, a decoding duration prediction module 43, a decoding duration analyzer 44, a packet loss analyzer 45, and a report sender 46.

The RTP analyzer 40 receives the encoded video V_{E} as a RTP stream, and tries to build compressed frames which are sent to the video decoder 41. The RTP analyzer 40 generates the following statistics: Delta duration between the packets, jitter, packet loss, Slice Loss Indication (in accordance with RFC 4585) and Picture Loss Indication (in accordance with RFC 4585).

The video decoder 41 receives the compressed frames from the RTP analyzer 40, and reconstructs decoded video frames. The decoding process of the compressed frame is based on different kinds of operations: Entropy decoding, inverse transform, motion compensation and station interpolation. Also, the video decoding process manages different kind of frames: the Intra-frames (I-frames), the predicted frames (P-frames) determined from past pictures, the bi-directional predicted frames (B-frames) in the case of H264, and the golden frames and alternate reference frames in the case of VP8.

When decoding a frame F, the video decoder 41 determines the following data:
- The total duration for decoding the frame F,
- The duration for the entropy decoding,
- The duration for the inverse transform,
- The motion compensation duration,
- The spatial interpolation duration, and
- The types of frames used for decoding the frame F: Only I, or I+P, or I+P+B...

The above durations may be determined for example as follows: the video decoding device 4 manages a system time. The video decoder 41 stores a time stamp at the beginning and at the end of the respective operations, and determines the duration of an operation based on the difference between the saved time stamps. Since the decoding of a frame may start before the end of the decoding of a previous frame, a plurality of time stamps may be stored for the same operation.

The decoded video frames are sent to the player 42 for display.

The decoding duration prediction module 43 predicts the mean duration to decode a frame, in function of the total durations and type of frames determined by the video decoder 41. The determination of the predicted mean duration may use one of the following approaches:
- A statistic approach considering the different types of frames. The decoding duration prediction module 43 estimates the duration required to decode each category of frame (I-frame, B-frame, P-frame ...). The decoding duration prediction module 43 takes as inputs the N last total durations determined by the video decoder 41. For each category of frame, a prediction of the duration per frame is computed with for example an adaptive linear predictor. Then, a second estimation is made to know the most probable sequence of frames' category that will be received by the video decoder 41. This estimation can be implemented by using a pattern sequence identifier that is in charge to identify periodic frames categories sequences or by using a statistical analyzer that updates for each sequence a probability from the sequences observed. From these estimations, a mean duration to decode the next N frames is computed.
- An exponentially weighted moving average calculation to filter the fluctuation of the decoding duration.
- A simple moving average.

The decoding duration analyzer 44 detects critical situations in function of the durations determined by the video decoder 41 and of the predicted mean duration determined by the decoding duration prediction module 43. For example, a critical situation may be determined when:
- The total duration to decode a frame F exceeds a predetermined threshold, or
- One of the elementary operation duration exceeds a predetermined threshold, or
- The predicted mean duration exceeds a predetermined threshold (maximum frame read duration).

In response to the detection of a critical situation, the decoding duration analyzer 44 triggers the report sender 46.

The packet loss analyzer 45 detects critical situations in function of the data provided by the RTP analyzer 40, and triggers the report sender 46 in response to the detection of a critical situation.

In response to a trigger from the decoding duration analyzer 44, the report sender 46 tests for a potential decoding problem in function of the predicted mean duration determined by the decoding duration prediction module 43, and of the frame rate of the encoded video V_{E}: If the predicted mean duration is superior to the inverse of the frame rate, a decoding problem is detected.

In response to the detection of a decoding problem or of a trigger from the RTP analyzer, the report sender 46 determines whether to send a report R to the video encoding device 2 or not. This choice depends on a trade-off between the number of reports sent (too many reports may overload the network and the video decoding device 2) and an anticipation of the delay increasing for the video decoding process, that can generate a filling and a saturation of the buffers and a crashing of the video decoder 41. In case of a positive decision, the report is sent for example by using the RTCP protocol. The RTCP packet interval is determined for example according to the requirement defined in RFC 3550 section 6.2. To avoid an overload of the network with reports in an unstable situation, a maximum number of reports by unit time is configured.

As explained above, a report R includes the durations of decoding operations determined by the video decoder 41 and/or the prediction of the mean duration of decoding a frame determined by the decoding duration prediction module 43. The report R may also include transmission parameters, for example packet loss, Picture loss indication, Slice loss indication, Reference Picture Selection indication as specified in RFC 4585.

If the potential decoding problem disappears, a new report R is sent to the video encoding device 2.

The tasks performed by the functional modules (references 40 to 46) of the video decoding device 4 may correspond to steps of a video decoding method.

The functioning of the system 1 is as follows.

Initially, the video encoding device 2 streams the encoded video V_{E} to the video decoding device 4, and the video decoding device 4 has sufficient processing resources to decode the video frames in real time. Consequently, based on the decoding durations determined by the video decoder 41 and the predicted duration determined by the decoding duration prediction module 43, the decoding duration analyzer 44 does not detect a critical situation and does not trigger the report sender 46. The report sender 46 may send reports R regarding transmission parameters, and the encoding parameters P_{ENC} used by the video encoder 20 may be adapted correspondingly.

Later, the available processing resources of the video decoding device 4 for the video decoding process become insufficient. This may be cause for example because other applications are executed on the video decoding device 4 in parallel. Consequently, the decoding durations determined by the video decoder 41 and/or the predicted duration determined by the decoding duration prediction module 43 increase and the decoding durations analyzer 44 detects a critical situation. The decoding duration analyzer 44 then triggers the reports senders R which, if a potential decoding problem is detected, sends a report R including the durations and/or the predicted duration to the video encoding device 2. Consequently, the encoding parameters P_{ENC} may be adapted so as to reduce to processing resources needed at the video decoding device 4 to decode video frames, for example by reducing the frame rate. This ensures that the encoded video V_{E} continues to be decoded in real time.

Figure 4 is a structural view of a device, which may be the video encoding device 2 or the video decoding device 4. The device of Figure 4 comprises a processor 5 and a memory 6. The memory comprises a computer program P which include instructions executable by the processor 10. The functional modules shown on figure 2 or 3 may correspond to the execution of the computer program P by the device of Figure 4.

It is to be remarked that the functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared, for example in a cloud computing architecture. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts represents various processes which may be substantially represented in computer readable medium and so executed by a computer or processor, whether or not such computer or processor is explicitly shown.

Embodiments of the method can be performed by means of dedicated hardware and/of software or any combination of both.

While the principles of the invention have been described above in connection with specific embodiments, it is to be clearly understood that this description is made only by way of example and not as a limitation on the scope of the invention, as defined in the appended claims.

## Claims

1. Method for encoding a video (V_{R}), executed by a video encoding device (2), comprising:
- encoding said video (V_{R}) according to a first value of at least one encoding parameter (P_{ENC}),
- streaming the encoded video (V_{E}) to a video decoding device (4),
- receiving, from the video decoding device (4), a data element (R) representative of at least one of the duration of a decoding operation of the encoded video (V_{E}) by the video decoding device (4), and a prediction of the duration of a decoding operation of the encoded video (V_{E}) by the video decoding device (4),
- determining an updated value of the at least one encoding parameter (P_{ENC}) in function of the data element (R),
- encoding said video (V_{R}) according to the updated value of the at least one encoding parameter (P_{ENC}).

2. Method according to claim 1, wherein said data element (R) is representative of at least one of:
- a total duration for decoding a frame of the encoded video (V_{E}),
- a duration for an entropy decoding,
- a duration for an inverse transform,
- a motion compensation duration, and
- a spatial interpolation duration.

3. Method according to claim 1 or 2, wherein said data element (R) is representative of a predicted mean duration for decoding a frame of the encoded video (V_{E}).

4. Method according to one of claims 1 to 3, comprising:
- receiving, from a second video decoding device, a second data element representative of at least one of the duration of a decoding operation of the encoded video by the second video decoding device, and a prediction of the duration of a decoding operation of the encoded video by the second video decoding device,
- determining a second updated value of the at least one encoding parameter in function of the second data element.

5. Method according to claim 4, comprising determining whether processing resources of the video encoding device (2) are sufficient, and in the affirmative encoding said video according to the second updated value of the at least one encoding parameter and streaming the corresponding encoded video to the second video decoding device.

6. Computer program comprising instructions executable by a processor for performing the method for encoding a video according to one of claims 1 to 5 when said instructions are executed by a computer.

7. Video encoding device (2) for encoding a video (V_{R}), comprising:
- a video encoder (20) for encoding a video (V_{R}) according to a first value of at least one encoding parameter (P_{ENC}),
- means for streaming the encoded video (V_{E}) to a video decoding device (4),
- means for receiving, from the video decoding device (4), a data element (R) representative of at least one of the duration of a decoding operation of the encoded video by the video decoding device, and a prediction of the duration of a decoding operation of the encoded video by the video decoding device,
- an encoding parameters determination module (22) for determining an updated value of the at least one encoding parameter in function of the data element,
- wherein said video encoder (20) is configured for encoding said video according to the updated value of the at least one encoding parameter.

8. Method for decoding a video, executed by a video decoding device (4), comprising:
- receiving an encoded video (V_{E}) streamed from a video encoding device (2),
- decoding the encoded video (V_{E}),
- determining a duration of a decoding operation of the encoded video (V_{E}) by the video decoding device (4),
- transmitting, to the video encoding device (2), a data element (R) representative of at least one of said duration and a prediction of a duration of a decoding operation of the encoded video (V_{E}) by the video decoding device (4).

9. Method according to claim 8, wherein decoding a frame of the encoded video comprises an entropy decoding, an inverse transform, a motion compensation and a spatial interpolation, said method comprising determining at least one of:
- a total duration for decoding a frame of the encoded video,
- a duration for the entropy decoding,
- a duration for the inverse transform,
- a motion compensation duration, and
- a spatial interpolation duration.

10. Method according to claim 8 or 9, wherein said data element is representative of a predicted mean duration for decoding a frame of the encoded video.

11. Method according to one of claims 8 to 10, comprising:
- detecting a critical situation in function of said duration of a decoding operation and/or of said prediction of a duration of a decoding operation,
- in response to the detection of a critical situation, determining whether to transmit said data element to the video encoding device in function of a maximum number of transmission by unit of time.

12. Computer program comprising instructions executable by a processor for performing the method for decoding a video according to one of claims 8 to 11 when said instructions are executed by a computer.

13. Video decoding device (4) for decoding a video, comprising:
- means for receiving an encoded video (V_{E}) streamed from a video encoding device (2),
- a video decoder (41) for decoding the encoded video and determining a duration of a decoding operation of the encoded video by the video decoding device (4),
- a report sender (46) for transmitting, to the video encoding device (2), a data element (R) representative of at least one of said duration and a prediction of a duration of a decoding operation of the encoded video by the video decoding device (4).

14. System (1) comprising a video encoding device (2) according to claim 7 and at least one video decoding device (4) according to claim 13 connected by a network (3).

## Amended claims

### Amended claims in accordance with Rule 137(2) EPC.

1. Method for decoding a video, executed by a video decoding device (4), comprising:
- receiving an encoded video (V_{E}) streamed from a video encoding device (2),
- decoding the encoded video (V_{E}),
- determining a duration of a decoding operation of the encoded video (V_{E}) by the video decoding device (4),
- transmitting, to the video encoding device (2), a data element (R) representative of at least one of said duration and a prediction of a duration of a decoding operation of the encoded video (V_{E}) by the video decoding device (4),
**characterized in that** it comprises:
- detecting a critical situation in function of said duration of a decoding operation and/or of said prediction of a duration of a decoding operation,
- in response to the detection of a critical situation, determining whether to transmit said data element to the video encoding device in function of a maximum number of transmission by unit of time.

2. Method according to claim 1, wherein decoding a frame of the encoded video comprises an entropy decoding, an inverse transform, a motion compensation and a spatial interpolation, said method comprising determining at least one of:
- a total duration for decoding a frame of the encoded video,
- a duration for the entropy decoding,
- a duration for the inverse transform,
- a motion compensation duration, and
- a spatial interpolation duration.

3. Method according to claim 2, comprising detecting said critical situation in response to said total duration exceeding a predetermined threshold.

4. Method according to claim 2, comprising detecting said critical situation in response to said duration for the entropy decoding or said duration for the inverse transform or said motion compensation duration or said spatial interpolation duration exceeding a predetermined threshold.

5. Method according to claim 1 or 2, comprising detecting said critical situation in response to a predicted mean duration for decoding a frame exceeding a predetermined threshold.

6. Method according to one of claims 1 to 5, wherein said data element is representative of a predicted mean duration for decoding a frame of the encoded video.

7. Computer program comprising instructions executable by a processor for performing the method for decoding a video according to one of claims 1 to 6 when said instructions are executed by a computer.

8. Video decoding device (4) for decoding a video, comprising:
- means for receiving an encoded video (V_{E}) streamed from a video encoding device (2),
- a video decoder (41) for decoding the encoded video and determining a duration of a decoding operation of the encoded video by the video decoding device (4),
- a report sender (46) for transmitting, to the video encoding device (2), a data element (R) representative of at least one of said duration and a prediction of a duration of a decoding operation of the encoded video by the video decoding device (4),
**characterized in that** it comprises:
- means for detecting a critical situation in function of said duration of a decoding operation and/or of said prediction of a duration of a decoding operation,
- means for determining whether to transmit said data element to the video encoding device in function of a maximum number of transmission by unit of time, in response to the detection of a critical situation.

9. System (1) comprising a video encoding device (2) and at least one video decoding device (4) according to claim 8 connected by a network (3), the video encoding device (2) for encoding a video (V_{R}) comprising:
- a video encoder (20) for encoding a video (V_{R}) according to a first value of at least one encoding parameter (P_{ENC}),
- means for streaming the encoded video (V_{E}) to a video decoding device (4),
- means for receiving, from the video decoding device (4), a data element (R) representative of at least one of the duration of a decoding operation of the encoded video by the video decoding device, and a prediction of the duration of a decoding operation of the encoded video by the video decoding device,
- an encoding parameters determination module (22) for determining an updated value of the at least one encoding parameter in function of the data element,
- wherein said video encoder (20) is configured for encoding said video according to the updated value of the at least one encoding parameter.

10. System according to claim 9, wherein said data element (R) is representative of at least one of:
- a total duration for decoding a frame of the encoded video (V_{E}),
- a duration for an entropy decoding,
- a duration for an inverse transform,
- a motion compensation duration, and
- a spatial interpolation duration.

11. System according to claim 9, wherein said data element (R) is representative of a predicted mean duration for decoding a frame of the encoded video (V_{E}).
